Europäisches Patentamt

European Patent Office

Office européen des brevets

(11) Numéro de publication: **0 025 628**
A2

## (12) DEMANDE DE BREVET EUROPEEN

(21) Numéro de dépôt: **80200845.8**

(22) Date de dépôt: **10.09.80**

(51) Int. Cl.³: **B 01 D 35/22**

(30) Priorité: **12.09.79 BE 58079**

(43) Date de publication de la demande: **25.03.81**
**Bulletin 81/12**

(84) Etats contractants désignés: **AT CH DE FR GB IT LI LU NL SE**

(71) Demandeur: **STANDARD S.A., 16, Allée Marconi, Luxembourg (LU)**

(72) Inventeur: **van de Moortele, Guido Ivo Caesar, Floralienlaan 531, B-2610 Wilrijk (BE)**

(74) Mandataire: **Donné, Eddy, M.F.J.Bockstael Arenbergstraat 13, B-2000 Anvers (BE)**

(54) **Filtre à liquides à nettoyage automatique de l'élément filtrant.**

(57)    La présente invention a trait à un filtre à liquides à nettoyage automatique de l'élément filtrant, du type qui se compose essentiellement d'un corps ou boîtier (2) à ouverture d'entrée et ouverture de sortie (3-4), avec entre ces dernières un élément filtrant (5) proprement dit fait de gaze filtrante en forme de cuve, caractérisé en ce qu'à l'extrémité antérieure de l'élément filtrant (5), c'est-à-dire à l'extrémité où arrive le liquide à filtrer, sont disposées, dans l'espace par lequel le liquide se dirige vers l'élément filtrant (5) proprement dit, des aubes ou palettes (10), qui font un angle déterminé avec l'axe longitudinal de ce dernier.

0025628

- 1 -

Filtre à liquides à nettoyage automatique de l'élément filtrant.

La présente invention a trait à un filtre à liquides du type dans lequel le liquide à filtrer entre dans une chambre contenant un élément de filtration proprement dit sous forme d'une gaze de filtration, qu'il traverse avant de quitter l'appareil. Dans la majorité des cas, les ouvertures d'entrée et de sortie des filtres à liquides de ce genre sont coaxiales de manière à pouvoir être disposées de manière très simple dans une même conduite, tandis que l'élément de filtration proprement dit se présente sous forme d'un corps suspendu verticalement et constitué par une toile filtrante de forme d'un tube cylindrique à extrémité inférieure fermée, d'une petite cuve ou autre, tout cela de manière que les impuretés qui entrent dans le filtre restent tout simplement appliquées à l'élément filtrant pendant que le liquide à filtrer le traverse. Ces filtres sont de préférence également munis d'une ouverture de purge destinée à l'évacuation des impuretés qui, le cas échéant, se déposent sur le fond de l'appareil.

On sait que, dans les filtres de ce genre, les impuretés dont est chargé le liquide à filtrer et qui en sont séparées par effet de filtration, se déposent en majeure partie sur la toile filtrante, qui doit ainsi être nettoyée ou remplacée par trop fréquemment, ce qui, dans les deux cas, exige des arrêts fréquents de l'appareil au détriment du rendement de l'installation.

Aussi, la présente installation se rapporte-t-elle à des moyens, qui, en combinaison avec un filtre du genre défini ci-dessus, se prêtent à un nettoyage simple, automatique et ininterrompu de la toile filtrante, avec tous les avantages qui en résultent, à savoir, d'une part, des arrêts beaucoup moins fréquents et, d'autre part, une plus longue durée de vie de la toile filtrante grâce au fait que les impuretés n'ont pas le temps de se fixer définitivement dans ses mailles.

Les susdits moyens selon l'invention comportent essentiellement un corps ou boîtier à ouverture d'entrée et ouverture de sortie entre lesquelles est prévu un élément filtrant proprement dit fait de gaze filtrante et en forme de cuve, caractérisé en ce qu'à l'extrémité antérieure de l'élément filtrant, c'est-à-dire au niveau d'entrée du liquide à filtrer, sont prévues, dans la chambre par laquelle passe le liquide vers l'élément filtrant, des aubes ou palettes, qui forment un angle déterminé avec l'axe longitudinal de l'élément filtrant, de sorte que le liquide à filtrer introduit dans l'appareil exécute un mouvement en spirale ou tourbillonnaire autour de l'élément filtrant avant d'y pénétrer.

Les caractéristiques et avantages du système selon l'invention ressortiront plus clairement de la description détaillée suivante d'un mode d'exécution préféré, donnée à titre d'exemple sans la moindre intention restrictive et illustrée par les dessins annexés, où

la figure 1 représente de manière schématique un filtre à liquides vertical doté des perfectionnements selon l'invention;

la figure 2 représente une vue analogue à celle de la figure 1, mais d'un filtre horizontal doté des perfectionnements selon l'invention;

- 3 -

0025628

la figure 3 représente une coupe transversale d'un filtre à liquides d'un type répandu, dont la conception est basée sur le principe illustré par la figure 1;

la figure 4 représente à plus grande échelle et en coupe transversale l'élément de filtration proprement dit pourvu d'un dispositif de nettoyage selon l'invention;

la figure 5 représente une vue extérieure de l'élément filtrant selon la figure 4; et

la figure 6 représente une vue d'en haut de ce même élément filtrant.

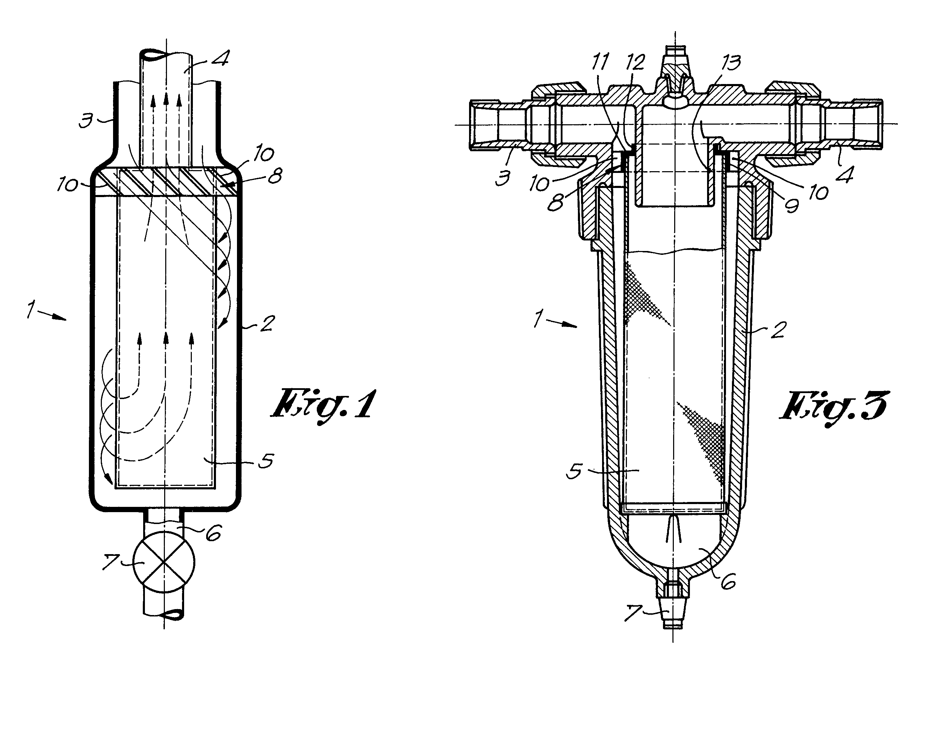

Le filtre à liquides 1, représenté par la figure 1, se compose d'un corps ou boîtier 2 muni en haut d'une ouverture d'entrée 3 de diamètre relativement grand, ainsi que d'une ouverture de sortie 4 de diamètre plus petit, prévue à l'intérieur de l'ouverture d'entrée 3, ainsi que d'un élément de filtration proprement dit 5 suspendu dans ledit boîtier 2 et composé principalement de gaze filtrante sous forme d'un cylindre creux, fermé en bas et arrangé en haut de manière que l'espace compris entre le diamètre extérieur de l'élément filtrant, d'une part, et le diamètre de l'ouverture de sortie 4, d'autre part, est également fermé, tout cela de sorte que le liquide à filtrer passant par l'ouverture d'entrée 3 et circulant autour de l'élément filtrant 5 entre dans le boîtier 2 et est ensuite forcé, de l'intérieur vers l'extérieur, à passer par la gaze filtrante du filtre 5 pour s'écouler finalement par l'ouverture de sortie 4. Pendant ce processus, les particules étrangères en suspension dans le liquide sont, de manière connue, arrêtées sur la gaze filtrante 5. Après quelque temps, ces particules se séparent de la toile filtrante et se déposent sur le fond de l'appareil, à partir duquel ils se laissent évacuer par une ouverture de purge 6, normalement fermée par un robinet, un clapet, un bouchon ou tout autre moyen de fermeture approprié 7.

A proximité de l'entrée du filtre, à savoir au niveau où le liquide à filtrer pénètre dans le boîtier 2 pour circuler autour de l'élément de filtration proprement dit 5, est prévu entre la paroi interne du boîtier 2 et le filtre 5 un
dispositif de nettoyage 8 selon l'invention, qui se présente
essentiellement sous forme d'un anneau, d'une couronne ou
d'un autre élément analogue approprié 9, muni à sa périphérie d'aubes ou de palettes 10, qui forment un angle déterminé avec l'axe du filtre. Cet anneau, bride ou dispositif
similaire 9 est immobile et lesdites aubes ou palettes 10
sont disposées dans le passage entre le boîtier 2 et l'élément filtrant 5, tout cela de manière que le liquide à filtrer, qui entre dans le boîtier 2 par l'ouverture 3, est
obligé de passer entre les aubes ou palettes 10, qui lui impriment, comme il est indiqué schématiquement par des flèches,
un mouvement de rotation tourbillonnaire ou en spirale autour
de l'élément filtrant 5 avant de passer par ce dernier et
de quitter l'appareil par l'ouverture de sortie 4.

On voit facilement que ce système présente le grand avantage
d'une évacuation ininterrompue des particules étrangères
séparées du liquide par filtration.

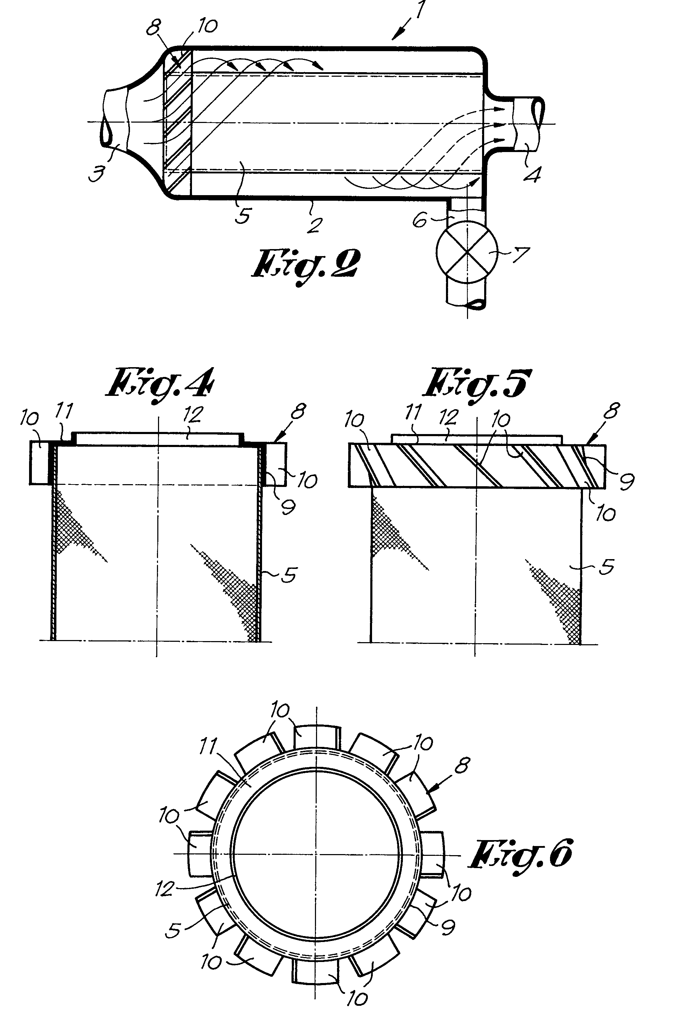

La figure 2 concerne un mode d'exécution analogue à celui selon la figure 1, mais où les ouvertures d'entrée et de sortie
se trouvent aux extrémités opposées de l'élément filtrant proprement dit 5.

La figure 3 représente une coupe axiale verticale d'un filtre dont la conception est basée sur le principe illustré
par la figure 1 et où se retrouvent tous les éléments représentés dans cette dernière avec illustration supplémentaire de la conception du boîtier 2, des possibilités de
raccord aux conduites, etc.

Enfin, les figures 4-6 illustrent à plus grande échelle la
disposition et la fixation (par exemple par collage) de la
gaze filtrante 5 dans l'anneau, la couronne ou tout autre
élément analogue 9, qui, dans le présente mode d'exécution, présente un rebord supérieur 11 pour un anneau 12, au moyen duquel est fixée la couronne 9 portant l'élément filtrant 5 à une partie centrale 13 du filtre selon le mode d'exécution illustré par la figure 3.

Inutile d'insister sur le fait qu'on obtient ainsi un moyen particulièrement simple et efficace pour nettoyer de manière ininterrompue et automatique la gaze filtrante du filtre à liquides concerné de toutes impuretés, qui après leur séparation de la gaze se laissent facilement évacuer par une ouverture de purge ou similaire 7.

Il va sans dire que l'invention ne se limite d'aucune façon à l'exemple de mise en oeuvre décrit dans les lignes précédentes et illustré par les dessins annexés, mais en prévoit de nombreuses modifications, additions et adaptations non seulement en ce qui concerne la construction du filtre, mais également en ce qui concerne la réalisation du dispositif de nettoyage, évidemment à condition de respecter son principe fondamental et de ne pas dépasser son cadre défini par les revendications formulées ci-après.

0025628

Revendications.

1.- Filtre à liquides à nettoyage automatique de l'élément filtrant, du type qui se compose essentiellement d'un corps ou boîtier (2) muni d'une ouverture d'entrée et d'une ouverture de sortie (3-4), avec entre ces dernières un élément filtrant (5) proprement dit fait de gaze filtrante en forme de cuve, caractérisé en ce qu'à l'extrémité antérieure de l'élément filtrant (5), c'est-à-dire à l'extrémité où arrive le liquide à filtrer, sont disposées, dans l'espace par lequel le liquide se dirige vers l'élément filtrant proprement dit, des aubes ou palettes (10), qui font un angle déterminé avec l'axe longitudinal de l'élément filtrant (5), tout cela de manière que le liquide à filtrer, après son entrée dans le filtre, exécute un mouvement de rotation spiralé ou tourbillonnaire autour de l'élément filtrant (5) avant d'y pénétrer.

2.- Filtre à liquides à nettoyage automatique de l'élément filtrant selon la revendication 1, caractérisé en ce que lesdites aubes ou palettes (10) sont disposées à des distances régulières sur un anneau (9), par l'entremise duquel elles sont fixées sur l'extrémité correspondante de l'élément filtrant (5).

3.- Filtre à liquides à nettoyage automatique de l'élément filtrant selon l'une ou l'autre des revendications précédentes, caractérisé en ce que ledit anneau (9) est fixé à une partie intérieure, à laquelle est fixé un deuxième anneau (12), qui est concentrique avec le premier et sert à fixer ledit élément filtrant (5) au corps du filtre (3).

Fig.1

Fig.3

0025628

1/2

**Fig. 2**

**Fig. 4**

**Fig. 5**

**Fig. 6**